# EUROPÄISCHE PATENTSCHRIFT

(11) **EP 3 450 128 B1**
(45) Veröffentlichungstag und Bekanntmachung des Hinweises auf die Patenterteilung: **03.03.2021**
(21) Anmeldenummer: 18000696.7
(22) Anmeldetag: 27.08.2018
(51) Int. Cl.: B29B 15/10, B29K 309/02, B29K 509/02, B29K 307/04, B29K 309/08

(54) **VERFAHREN ZUR HERSTELLUNG EINES ZWISCHENPRODUKTS FÜR DIE FERTIGUNG EINES FASERVERSTÄRKTEN BAUTEILS**
METHOD FOR THE PREPARATION OF AN INTERMEDIATE PRODUCT FOR THE MANUFACTURE OF A FIBRE-REINFORCED PART
PROCÉDÉ DE FABRICATION D'UN PRODUIT INTERMÉDIAIRE DESTINÉ À LA FABRICATION D'UN COMPOSANT RENFORCÉ PAR DES FIBRES

(30) Priorität: 31.08.2017 DE 102017008180
(43) Veröffentlichungstag der Anmeldung: 06.03.2019
(73) Patentinhaber: Knohl, Stefan, 95445 Bayreuth (DE); Wamser, Thomas, 95447 Bayreuth (DE); Martin, Bernd, 96050 Bamberg (DE); Krenkel, Walter, 95445 Bayreuth (DE)
(72) Erfinder: Knohl, Stefan, 95445 Bayreuth (DE); Wamser, Thomas, 95447 Bayreuth (DE); Martin, Bernd, 96050 Bamberg (DE); Krenkel, Walter, 95445 Bayreuth (DE)
(74) Vertreter: Grimm, Ekkehard

(56) Entgegenhaltungen:
- WO-A1-2016/016388
- US-A- 4 204 644
- US-A- 4 702 872

## Beschreibung

Die vorliegende Erfindung betrifft ein Verfahren zur Herstellung eines Zwischenprodukts für die Fertigung eines faserverstärkten Bauteils, ein Verfahren zur Herstellung eines Bauteils aus einem solchen Zwischenprodukt sowie die Verwendung eines solchen Bauteils.

Bei bekannten Verfahren zur Herstellung eines Zwischenprodukts bzw. Prepregs (mit Reaktionsharzen vorimprägniertes Faser-Matrix-Halbzeug) für die Fertigung eines faserverstärkten Bauteils werden abgelängte Glasfasern, Kohlenstofffasern oder keramische Fasern, keramische Partikel, Wasser, eine alkoholische Verbindung und ein Dispergator eingesetzt. Aus diesen Bestandteilen wird ein Zwischenprodukt auf einem Träger gebildet, bei dem die Fasern durch eine Suspension imprägniert sind, die die keramischen Partikel, das Wasser, die alkoholische Verbindung und den Dispergator, zusätzlich auch Harze und Härter, enthält.

Keramische faserverstärkte Verbundwerkstoffe werden in vielen Bereichen eingesetzt. Im Gegensatz zu monolithischen Keramiken, die im Allgemeinen ein sprödes Bruchverhalten zeigen, wird bei keramischen faserverstärkten Verbundwerkstoffen durch den Verbund von Fasern und der die Fasern umgebenden Matrix ein zähes bzw. quasiduktiles Bruchverhalten erzielt. Keramische Verbundwerkstoffe bestehen aus keramischen Fasern, zum Beispiel Fasern aus C (Kohlenstoff), SiC (Siliziumkarbid), Al₂O₃ (Aluminiumoxid), Mullit und einer keramischen Matrix aus beispielsweise C, SiC, Al₂O₃, Mullit.

Als Faserverstärkung kommen hochtemperaturbeständige Endlosfaserbündel zum Einsatz, die aus bis zu 50.000 Einzelfilamenten mit einem Filamentdurchmesser von ca. 12 µm bestehen. Das Bruchverhalten des Composites wird gezielt durch die Anpassung der Faser-Matrix-Bindung eingestellt. Ein wichtiger Aspekt ist, dass Risse nicht durch die Matrix in die Faser eingeleitet werden, sondern dass es zu energiedissipierenden Effekten wie Rissverzweigung, Rissumlenkung oder Faser-Pull-Out kommt. Ein weit verbreitetes Konzept sieht eine Faserbeschichtung zur Einstellung der Faser-Matrix-Bindung vor. Ein anderer Ansatz ist die Einbettung der Fasern in eine poröse schwache Matrix. Durch die hohe Porosität der Matrix und die somit reduzierte Steifigkeit der Matrix kommt es zu den gewünschten energiedissipierenden Effekten, die zu einem quasiduktilen Bruchverhalten führen. Die Matrix wird üblicherweise durch die Imprägnierung der Faserrovings oder der Faserarchitektur mit Schlickern, Suspensionen, Precursoren, Polymeren oder Metallschmelzen synthetisiert. Durch eine Temperaturbehandlung von über 1000 °C bildet sich dann die Matrix aus. Die Matrix muss eine ausreichende Festigkeit aufweisen, so dass es zu keiner Kraftübertragung zwischen den Filamenten kommt.

Für die Herstellung von kurzfaserverstärkten, keramischen Verbundwerkstoffen sind verschiedene Verfahren bekannt.

Bei einem als keramischer Spritzguss (Ceramic Injection Molding - CIM) bekannten Verfahren werden geschnittene, keramische Fasern und keramische Partikel mit einem Binder zu einem sogenannten Feedstock verarbeitet. Die Aufbereitung erfolgt im Schmelzbereich des verwendeten Binders zum Beispiel mittels Knetern oder geeigneten Mischern. Danach erfolgt die Verarbeitung analog zu dem aus der Kunststofftechnik bekannten Spritzgussverfahren. Vor einem Sintern wird der Spritzkörper einem Entbindern unterworfen. Ein Nachteil dieses Verfahrens ist eine Aufbereitung des Feedstocks, bei der Faserdegradationen durch hohe Scherkräfte auftreten können, wodurch die Faserstrukturen, beispielsweise eine Bündelstruktur, zerstört werden. Zudem sind lange und aufwändige Entbinderungszyklen zur Entfernung des zur Formgebung benötigten Binders, teilweise von mehr als 48 Stunden, notwendig. Problematisch sind hierbei dickwandige Bauteile, die lange Entbinderungszyklen benötigen, so dass sie unter wirtschaftlichen Aspekten nicht hergestellt werden können. Auch müssen die verwendeten Herstellungsaggregate, wie beispielsweise Kneter, Mischer und Spritzgussmaschine, keramikgerecht, d.h. verschleiß- und abriebsbeständig, ausgeführt sein. Der gravierendste Nachteil beim keramischen Spritzguss ist jedoch die Ausbildung von Texturen und eine schwer beeinflussbare Ausrichtung der Fasern während des Gießens. Zudem sind realisierbare Faserlängen in dem Bauteil aufgrund der Faserdegradation stark eingeschränkt und im Wesentlichen auf sehr kurze Faserlängen im Bereich von wenigen Millimetern beschränkt.

Bei der Prepregtechnologie werden vorimprägnierte, flächige Faserarchitekturen verarbeitet. Dies erfordert einerseits eine aufwändige textiltechnische Verarbeitung der Fasern zu Geweben, Vliesen oder Gelegen, und andererseits ist durch die flächige Faserarchitektur die erreichbare Geometrie der Endkontur limitiert. Die flächige Faserarchitektur wird beispielsweise bei Geweben durch die Webstruktur und bei Vliesen durch Binder oder durch eine hohe Anzahl an Berührungspunkten zwischen den Filamenten fixiert, damit die Faserarchitektur verarbeitet werden kann. Eine Ausformung von Auswölbungen mit Radien > 60° ist nur dann zu erreichen, wenn das Prepreg zugeschnitten wird. Eine Zugdruckumformung ist nicht möglich.

Weiterhin werden für die Herstellung von Formteilen aus glasfaserverstärktem Kunststoff Faserspritzprozesse eingesetzt. Wesentliche Bestandteile einer hierfür eingesetzten Faserspritzvorrichtung sind Spritzpistole und Schneideinheit mit einer Zuführung für Rovings. Die geschnittenen Fasern fallen üblicherweise in ein mit Harz, Härter und/oder Katalysator ausgebildetes Spritzfach, und werden dadurch endkonturnah auf einer Form abgelegt. Nach dem Faserspritzen kann das Harz gegebenenfalls noch mittels Laminierroller in die Faserrovings eingearbeitet werden, Lufteinschlüsse können entfernt werden und die gespritzte Faseranordnung kann nach einem Pressprozess durch eine Temperaturbehandlung ausgehärtet werden.

Anstelle von Glasfasern und Harzen können auch keramische Rohstoffe (Fasern und Partikel) eingesetzt werden. Derartige Materialsysteme werden beispielsweise beim Spritzen von Ofenisolationen verwendet, wie dies in der EP 0 213 707 A2 mit dem Titel "Spray-applied ceramic fiber insulation" beschrieben ist. Nach dem Spritzen der Suspension und der Fasern wird das Dispersionsmedium durch einen Trocknungsprozess entzogen. Die gespritzten Strukturen werden anschließend durch ein Sintern verfestigt.

Optional gibt es die Möglichkeit, zunächst eine Faserpreform aus Faserbündeln herzustellen und diese dann mittels einer Suspension, z. B. mittels Vakuuminfiltration, zu infiltrieren, wie dies in der EP 2 848 599 A1, die auf ein Oxid-Keramik-Komposit-Material und eine Faser-Preform für dessen Herstellung gerichtet ist, und in der US 2013/0116109 A1, die auf ein Verfahren zum Herstellen eines Keramik-Matrix-Komposit-Teils gerichtet ist, beschrieben ist.

Die WO 2016/016388 A1 beschreibt ein Verfahren zum Herstellen eines Prepregs für ein CMC (Ceramic-Matrix-Composite) und insbesondere für eine CFRC (Ceramic-Fiber-Reinforced-Ceramic). Für die Herstellung eines CMC-Materials werden keramische Fasern mit einer Suspension aus einem keramischen Pulver und Dispersionsmedium imprägniert, wobei die Suspension Glycerin und eine geringe Menge an organischem Bindemittel neben dem keramischen Pulver enthält. Nach der Imprägnierung der Fasern wird der Wassergehalt der Suspension verringert, um das Volumenverhältnis des keramischen Pulvers in der Suspension zu verringern, um so ein Prepreg mit einer Suspension zu erhalten, bei dem der Feststoffgehalt an keramischem Pulver 45 Vol.% oder mehr beträgt.

### [Einschub Seite 7a]

Der vorliegenden Erfindung liegt die Aufgabe zugrunde, ein entsprechendes Verfahren zur Herstellung eines solchen Zwischenprodukts anzugeben, ebenso wie eine Vorrichtung zur Durchführung eines solchen Verfahrens, die zumindest einen Teil der vorstehend beschriebenen Nachteile vermeiden. Auch ist die Erfindung auf die Herstellung eines Bauteils aus einem solchen Zwischenprodukt sowie die Verwendung eines solchen Bauteils gerichtet.

Die Aufgabe der Erfindung wird durch ein Verfahren mit den Merkmalen des Anspruchs 1 gelöst.

Die Erfindung betrifft auch ein Verfahren zur Herstellung eines Bauteils aus einem derartigen Zwischenprodukt sowie die Verwendung eines solchen Bauteils als Brennerdüse oder Gasturbinen-Bauteil mit definierten Hohlräumen.

Vorteilhafte Ausgestaltungen des erfindungsgemäßen Verfahrens sind in den abhängigen Ansprüchen angegeben.

Mit dem erfindungsgemäßen Verfahren werden für die Herstellung eines Zwischenprodukts, das für die Fertigung eines faserverstärkten Bauteils dient, abgelängte Glasfasern, "Kohlenstofffasern oder keramische Fasern, keramische Partikel, Wasser, eine alkoholische Verbindung und ein Dispergator eingesetzt. Aus diesen Bestandteilen wird das Zwischenprodukt auf einem Träger derart gebildet, dass die Faserbündel durch eine Suspension imprägniert sind, die die keramischen Partikel, das Wasser, die alkoholische Verbindung und den Dispergator enthält, bevor die Fasern auf den Träger treffen. Wesentlich ist, dass als Ausgangsmaterial für das Zwischenprodukt kontinuierliche Faserbündel eingesetzt werden, die auf eine vorgegebene Länge geschnitten werden. Vor dem Ablegen der auf die vorgegebene Länge geschnittenen [Die US 4203644 beschreibt eine Sprühvorrichtung eines mit Glasfasern verstärkten Zementerzeugnisses. Hierzu wird eine Zementmörtel-Sprühvorrichtung vom Walzentyp und eine Glasstapelfaser-Sprühvorrichtung, die zerhackte Glasseide in den durch die Zementmörtel-Sprühvorrichtung vom Walzentyp erzeugten Zementmörtelstrom über einen Blaskanal einsprüht, angegeben. Mit der Zementmörtel-Sprühvorrichtung vom Walzentyp wird, der Zementmörtel einer Bürstenwalze zugeführt und durch diese über die Bürsten der Walze versprüht. Der eingesetzte Zementmörtel ist mineralisch und als Schlicker anzusehen. Dadurch, dass die Glasstapelfasern über den Blaskanal in den Zementmörtel eingeblasen werden, werden diese unweigerlich vereinzelt und die vereinzelten Fasern werden in beliebiger Richtung orientiert, bevor sie auf dem Tisch abgelegt werden.

Die US4702872 beschreibt ein Verfahren zur Herstellung eines faserverstärkten Formmaterials, bei dem eine flüssige, unter Wärme härtende Harzzusammensetzung auf die Oberfläche mindestens einer in Drehung befindlichen Überführungswalze abgegeben wird. Die an dieser Oberfläche haftende Harzzusammensetzung wird durch eine Zerstreuwalze, die durch einen Spalt von der Überführungswalze getrennt ist, zerstreut. Die zerstreute Harzzusammensetzung wird angehäuft, indem sie mit separat versprühten Verstärkungsfasern gemischt wird. Die Faserschnipsel werden mittels Luftstrom auf endlose Bänder geblasen und dadurch mit einer starken Vorzugsorientierung ausgerichtet. Dann wird eingeschlossene Luft aus dem beispielsweise in einem Behälter entstandenen Haufen entfernt, und dadurch werden die Verstärkungsfasern in dem Haufen benetzt.]

Faserbündel auf dem Träger werden die Suspension und die geschnittenen Faserbündel zusammengeführt.

Die Vorrichtung, mit der das Verfahren durchgeführt wird, besitzt eine Auswurfeinrichtung, um Faserbündel auf einen im Abstand zu diesem positionierten Träger auszuwerfen. Eine Zerstäubungseinrichtung dient zum Zerstäuben einer Suspension aus keramischen Partikeln, Wasser, alkoholischer Verbindung und Dispergator. Die Zerstäubungseinrichtung erzeugt ein Spritzbild aus dieser Suspension. Dieses sogenannte Spritzbild ist als ein aus der zerstäubten Suspension aufgespannter, dreidimensionaler Körper definiert, und dieser Körper wird so auf den Träger gerichtet, dass das Spritzbild in Bezug auf den dreidimensional aufgespannten Körper eine Orientierung derart aufweist, dass eine gerichtete Ebene des Spritzbilds bzw. des dreidimensional aufgespannten Körpers die gemittelte Flugbahn der aus der Auswurfeinrichtung in Richtung auf den Träger ausgeworfenen Faserbündel unter einem Winkel schneidet. Folglich werden die Faserbündel während ihres Flugs auf den Träger mit der Suspension imprägniert.

Die sich auf dem Träger ablegenden, mit der Suspension imprägnierten Faserbündel können sich aufgrund der rheologischen Eigenschaften der Suspension gegeneinander verschieben und können somit auch einer Pressformgebung unterworfen werden. Es können dadurch auf entsprechenden Trägern, auf denen die geschnittenen Faserbündel, imprägniert mit der Suspension, abgelegt werden, komplexe Strukturen, beispielsweise Auswölbungen, abgeformt bzw. gebildet werden.

Gegenstände bzw. Verbundwerkstoffe, die aus den nach dem Verfahren hergestellten Zwischenprodukten, die mit den geschnittenen Faserbündeln durchsetzt sind, auch als Composite bezeichnet, gefertigt werden, finden als schadenstolerante Strukturwerkstoffe Anwendung. Als schadenstolerantes Verhalten wird ein bruchzähes quasi duktiles Bruchverhalten bezeichnet, im Gegensatz zu dem nicht schadenstoleranten, spröden Bruchverhalten, das Keramiken aufweisen. Vorteilhaft ist auch, dass bei einem Pressen der auf dem Träger abgelegten geschnittenen Faserbündel, die in der Suspension eingebettet sind, kein Matrixmaterial aus den Faserbündeln herausgedrückt werden kann, da ansonsten das schadenstolerante Bruchverhalten des Composites nicht eingestellt werden kann. Das Composite ist schneid- oder stanzbar und kann somit auch mehrlagig in Formen eingelegt werden.

Das erfindungsgemäße Verfahren ermöglicht die Herstellung keramischer Verbundwerkstoffe mit einem gleichmäßigen, hohen Faservolumengehalt von über 20 Vol.% und den Aufbau einer homogenen Matrix, die die Fasern umgibt. Durch den hohen, erreichbaren Faservolumengehalt und die homogene Matrix können Biegefestigkeiten von über 50 MPa und ein quasi-duktiles Bruchverhalten realisiert werden. Auch ist es möglich, eine isotrope oder vorzugsorientierte Verteilung der geschnittenen Faserbündel, unter Aufrechterhaltung der Faserbündelstruktur, zu erreichen.

Die Suspension und die geschnittenen Faserbündel werden unter Aufrechterhaltung deren Bündelstruktur zusammengeführt. Dies wird dadurch erreicht, dass die Bündelstruktur durch Einstellung der Viskosität der zugeführten Suspension und/oder durch Einstellen der Länge der zugeführten Faserbündel aufrechterhalten wird. Wenn die Länge der Faserbündel erhöht wird, tritt der Effekt auf, dass die anziehenden Wechselwirkungen zwischen den Filamenten zunehmen und so eine Vereinzelung nur schwer möglich ist. Durch die Einstellung der Viskosität auf Werte von unter 1 Pa s bei einer Scherrate von 1 s⁻¹ ergibt sich, dass die Filamente nach der homogenen Benetzung mit der Suspension als Faserbündel erhalten bleiben. Wird die Viskosität zu hoch eingestellt, so ist jedoch nicht mehr gewährleistet, dass die Faserbündel vollständig homogen imprägniert sind.

Es ist auch vorgesehen, dass mindestens zwei unterschiedliche Längen geschnittener Faserbündel zugeführt werden. Durch diese Mischung der Faserbündel unterschiedlicher Länge, die mit der Suspension imprägniert werden, bevor sie sich auf dem Träger ablegen, wird durch die bimodale Längenverteilung ein höherer Faservolumengehalt erreicht.

Sehr gute Ergebnisse in Bezug auf die Benetzung der Filamente im gesamten Faserbündel werden dadurch erreicht, dass die Masse der Suspension im Verhältnis zu der Masse der Faserbündel mindestens 4:1 beträgt. Bei einem solchen Verhältnis ist sichergestellt, dass die Suspension alle Filamente im Faserbündel imprägniert.

Um zu erreichen, dass der Wärmeausdehnungskoeffizienten der verwendeten keramischen Fasern an die der verwendeten Matrix angepasst wird oder die chemische Beständigkeit erhöht wird, können zwei unterschiedliche Fasertypen als Faserbündel eingesetzt werden.

Für die Herstellung des Zwischenprodukts werden kontinuierliche Faserbündel zu einer definierten Länge von 2 mm bis 50 mm, bevorzugt von 2 mm bis 15 mm, noch bevorzugter von 2 mm bis 8 mm, abgelängt und mit der Suspension imprägniert.

Mit dem erfindungsgemäßen Verfahren ist es möglich, ein homogenes und lagerfähiges Prepreg, als Zwischenprodukt, herzustellen, das aus kontinuierlichen Faserbündeln erzeugte Faserbündel-Abschnitte mit zum Beispiel 14 mm Länge und eine auf Wasser basierende Suspension enthält. Die Verwendung von Faserbündel-Abschnitten mit Faserlängen von nur 2 mm bis 8 mm ist möglich. Ein solches Zwischenprodukt ist zur Herstellung von kurzfaserverstärkten keramischen Verbundwerkstoffen geeignet. Das Zwischenprodukt zeigt ein gutes Verhalten bei einer Zugdruckumformung, um auch komplexe Formgebungen zu erreichen.

Über die Anzahl der Filamente in den eingesetzten Faserbündeln kann in vorteilhafter Weise der Faservolumengehalt eingestellt werden. Entsprechendes trifft auch für den Durchmesser der einzelnen Filamente zu. Die Faserbündel sollten jeweils 100 Filamente bis 10.000 Filamente aufweisen, wobei der Durchmesser der einzelnen Filamente im Bereich von 7 µm bis 15 µm liegen sollte. Mit größer werdender Anzahl von Filamenten in den Faserbündeln wird erreicht, dass der Faservolumengehalt ansteigt und dadurch die Festigkeiten der hergestellten Verbundwerkstoffe.

Für Biegefestigkeiten > 50 MPa ist es zu bevorzugen, dass die Mengen der Bestandteile des Zwischenprodukts so eingestellt werden, dass der Faservolumengehalt in dem faserverstärkten Bauteil nach einer Trocknung und Sinterung 15 % bis 50 %, bevorzugt 20 % bis 40 %, beträgt. Diese Vorgaben können auch durch die vorstehenden Angaben in Bezug auf die Anzahl der Filamente in den Faserbündeln erreicht werden.

Die keramischen Fasern können aus den folgenden Gruppen ausgewählt werden: Fasern aus Al₂O₃, SiO₂, ZrO₂, Y₂O₃, Y₂O₃-stabilisiertem ZrO₂, Yttrium-Aluminium-Granat, Mullit, Si₃N₄, SiC, SiCN, SiBNC oder Kohlenstoff, oder Kombinationen von zwei oder mehr dieser Materialien

Besonders bevorzugt sind Fasern aus Al₂O₃ oder SiC, die sehr gut auch im kommerziellen Maßstab verfügbar sind.

Als keramische Partikel sollten solche aus Al₂O₃, SiO₂, ZrO₂, Y₂O₃, Y₂O₃-stabilisiertem ZrO₂, Yttrium-Aluminium-Granat, Mullit, Si₃N₄, SiC, SiCN, SiBNC oder Kohlenstoff oder aus Kombinationen von zwei oder mehr solcher Materialien, eingesetzt werden. Besonders bevorzugt ist eine bimodale Partikelgrößenverteilung aus unterschiedlichen Materialien zu verwenden, die der chemischen Zusammensetzung der Fasern entsprechen, so dass die die keramischen Partikel miteinander versintert werden können. Dadurch kann eine keramische Matrix erhalten werden und es wird erreicht, dass die Ausdehnungskoeffizienten angeglichen werden, um dadurch eine Schwindung des Verbundbauteils zu unterbinden.

Es ist vorgesehen, dass die Suspension einen Feststoff-Volumengehalt von 10 % bis 40 %, bezogen auf das Gesamtvolumen der Suspension, aufweist. Ein geringer Feststoff-Volumengehalt führt zu einem geringeren Anteil der Matrix im Zwischenprodukt, während ein hoher Feststoff-Volumengehalt im Bereich von bis zu 40 % dazu führt, dass eine homogene Imprägnierung der Faserbündel stattfindet und somit eine vollständige Entkopplung gewährleistet wird.

Mit einer bimodalen Größenverteilung der keramischen Partikel, d.h. einer Partikelgrößenverteilung (gemessen mittels Laserbeugung), bei der 2 Peaks existieren, welche sich nicht überlappen 8ein Peak zwischen 0,05 bis 0,3 µm, bevorzugt zwischen 0,08 bis 0,2 µm (Feinanteil) und ein Peak zwischen 0,5 bis 3 µm, bevorzugt zwischen 0,7 bis 1,2 µm (Grobanteil)), ergibt sich ein verbessertes Versintern der einzelnen keramischen Partikel und eine geringere Schwindung des Verbundwerkstoffs.

Bevorzugt ist es, eine Suspension herzustellen und einzusetzen, die keramische Partikel aus Al₂O₃ mit einem Anteil von 75 wt.% (Gewichtsprozent) an groben Al₂O₃ Partikeln und einem Anteil von 5 wt.% an feinen Al₂O₃ Partikeln sowie mit 25 wt.% ZrO₂, unter Zusatz von Wasser und, bezogen auf den Feststoffgehalt, 26 wt.% Glycerin sowie 1 wt.% des Dispergators einzusetzen. Optional kann auch ein organisches Bindemittel zugesetzt werden.

Das erfindungsgemäße Verfahren ist auch dazu geeignet, auf dem Träger einen Schichtaufbau zu bilden, der in Richtung der sich aufbauenden Schichten und/oder in einer Richtung senkrecht dazu einen Gradienten aufweist. Der Gradient wird dadurch erhalten, dass der Volumenanteil an Fasern und keramischen Partikeln in den jeweiligen sich aufbauenden Schichten eingestellt wird.

Auch ist vorgesehen, auf dem Träger einen Schichtaufbau zu erzeugen, der in Richtung der sich aufbauenden Schichten und/oder in einer Richtung senkrecht dazu einen Gradienten aufweist, der durch eine Variation der Faserorientierung und des Volumenanteils der keramischen Partikeln in den jeweiligen Schichten erhalten wird. Für eine Festigkeitssteigerung wird in Richtung der sich aufbauenden Schichten zwischen den einzelnen, gebildeten Schichten ein Fasergewebe oder Fasergelege eingefügt. Durch diese Zwischenlagen wird ein hoch fester Verbund erhalten, in dem die Zwischenlagen zu einer im Vergleich zu Schichten ohne Zwischenschichten erhöhten Festigkeit führen, während die Faserschichten aus den abgelängten Faserbündeln dazu dienen, die Kosten des Bauteils zu senken.

Als Träger kann ein Prepreg eingesetzt werden, das dann einen Teil des Zwischenprodukts bildet.

Mit dem erfindungsgemäßen Verfahren kann eine flächenisotrope Verteilung der Faserbündel auf dem Träger durch Einstellen des Zerstäubungsdrucks, unter dem die Suspension an der Zerstäubereinheit zerstäubt wird, erhalten werden. Bei niedrigem Druck erfolgt das direkte Ablegen der imprägnierten Faserbündel ohne eine veränderte Orientierung der Bündel, während bei höherem Druck die Orientierung der Faserbündel durch deren Drehung während des Flugs auf den Träger beeinflusst wird.

Die Benetzung der Faserbündel mit der Suspension wird so beeinflusst, um eine flächenisotrope Verteilung der Faserbündel auf dem Träger zu erhalten, indem der Winkel, unter dem die geschnittenen Faserbündel und die Suspension zusammengeführt wird, und/oder die Flugbahn der Faserbündel in Richtung des Trägers und/oder der Abstand zwischen der Spritzeinheit, die die Suspension abgibt, und dem Träger verändert bzw. eingestellt wird.

Durch die räumliche Verteilung der geschnittenen Faserbündel vor Auftreffen auf den Träger und/oder vor der Zusammenführung mit der Suspension kann eine unidirektionale Verteilung der Faserbündel auf dem Träger erzeugt werden. Insbesondere werden hierzu die Breite und die Länge der Auswurfeinrichtung, aus der die geschnittenen Faserbündel abgegeben werden, und/oder der Abstand zwischen Träger und Auswurfeinheit verändert.

Vorrichtungsgemäß ist in einer bevorzugten Ausgestaltung mindestens eine Schneideinrichtung vorgesehen, die das mindestens eine kontinuierlich zugeführte Faserbündel zu Faserbündeln mit einer vorgegebenen, definierten Länge schneidet. Um Faserbündel unterschiedlicher Längen zu erzeugen, werden mindestens zwei unterschiedliche Schneidvorrichtungen verwendet, so dass die Faserbündel mit unterschiedlichen Längen gleichzeitig abgegeben werden können und sich dadurch optimal vermischen.

Über einen Faserauswurf der Schneidvorrichtung wird in einer Ausführungsform die Flugbahn der Faserbündel in Richtung auf den Träger festgelegt.

Bevorzugt besitzt die mindestens eine Schneideinrichtung ein rotierendes Schneidmesser.

Für eine Einstellung verschiedener Verfahrensparameter, wie sie auch vorstehend anhand des Verfahrens erläutert sind, ist die Vorrichtung so aufgebaut, dass der Träger und die Zerstäubungseinrichtung relativ zueinander in allen Raumrichtungen beweglich angeordnet sind, die Auswurfeinrichtung zusammen mit der Zerstäubungseinrichtung in allen Raumrichtungen beweglich angeordnet ist und der Träger relativ zur Zerstäubungs- und Auswurfeinrichtung in allen Raumrichtungen beweglich ist.

Durch diese Maßnahme kann insbesondere die winkelmäßige Orientierung des Körpers des Spritzbilds zu der Flugbahn der Faserbündel ebenso wie die Strecke, auf der die Suspension die Faserbündel benetzen kann, beeinflusst und eingestellt werden.

Der Winkel zwischen dem Körper, der das Spritzbild bildet, und der Flugbahn der Faserbündel, die als eine mittlere Flugrichtung der Faserbündel definiert ist, jeweils als eine mittlere, zweidimensionale Fläche betrachtet, wird im Bereich von 1° bis 179°, vorzugsweise von 20° bis 90°, besonders bevorzugt von 30° bis 50°, eingestellt.

Vorzugsweise sollte demgemäß der Winkel ein spitzer Winkel sein, da unter einem solchen Winkel von 30° bis 50° die Faserbündel homogen imprägniert werden und die Faserbündelstruktur beim Ablegen der imprägnierten Faserbündel erhalten bleibt.

Die Zerstäubungseinrichtung, und diesbezüglich deren Düsenaustritt, ebenso wie die Auswurfeinrichtung, diesbezüglich deren Austrittsöffnung, werden vorzugsweise in einem Abstand von mindestens 30 cm zu dem Träger angeordnet. Wie bereits vorstehend erwähnt ist, muss eine ausreichende Flugstrecke und damit Flugzeit der mit der Suspension benetzten Faserbündel eingestellt werden, damit eine ausreichende Benetzung der Faserbündel mit der Suspension erhalten wird.

Aus einem Zwischenprodukt, wie es vorstehend beschrieben ist, kann ein Bauteil hergestellt werden, indem das Zwischenprodukt bei mindestens 700 C gesintert wird. Ein solches Bauteil sollte nach der Sinterung eine Porosität von mindestens 25 Vol.% und eine Biegefestigkeit von 100 MPa aufweisen. Durch eine Porosität von mindestens 25 Vol.% wird erreicht, dass das Prinzip der schwachen porösen Matrix und somit das quasi-duktile Bruchverhalten erzielt wird. Eine bevorzugte Verwendung eines solchen Bauteils ist diejenige als Brennerdüse oder Gasturbinen-Bauteil mit definierten Hohlräumen.

Durch den Spritzwinkel kann die Faserausrichtung und -ablage beeinflusst werden. Der Abstand zwischen Faserspritzpistole und Formenoberfläche beträgt mindestens 300 mm und liegt zwischen 300 und 1500 mm. Als Düse werden bevorzugt Düsen eingesetzt, die ein Spritzblatt erzeugen. Die Suspension wird mit einem Druck von 2 x 10⁴ bis 2 x 10⁷ Pa gefördert (z.B. über Pumpe oder unter Verwendung eines Drucckessels).

Für die Herstellung eines kurfaserverstärkten Bauteils mit plattenförmiger Geometrie aus einem oder mehreren flächigen Prepregs kann wie folgt verfahren werden:
Als Verstärkungsfasern dienen beispielsweise Nextel™610 10000D Faserrovings. Vor der Verarbeitung werden diese nicht entschlichtet. Die verwendete, wässrige Suspension besitzt einen Feststoffgehalt von 60 wt.%. Der verwendete, keramische Rohstoff ist eine Al₂O₃-ZrO₂ Pulvermischung mit 80 wt.% MRS1 des Herstellers Albemale und 20 wt.% TZ-3Y-E des Herstellers Tosoh mit einer bimodalen Partikelgrößenverteilung. Der Suspension werden 1 wt.% Dispergator (Sokolan PA 15, BASF), 0,25 wt.% Binder (Plextol B 500, Synthomer Deutschland) und 26 wt.% Glycerin, jeweils bezogen auf den Feststoff, zugegeben.

Die Vorrichtung zur Herstellung kurzfaserverstärkter Keramiken besteht aus einem Faserschneidwerk (Cutter) mit einer druckluftbetriebenen Spritzpistole (Zweistoffdüse, die auf dem Prinzip nach dem HVLP-Verfahren (HVLP = High Volume Low Pressure) arbeitet, mit einem Durchmesser der Düsenöffnung von 2,8 mm und das Faserschneidwerk sowie die Spritzpistole sind verfahrbar oberhalb eines Tischs, der als Auflage für einen Träger dient, positioniert. Weiterhin ist eine Absaugung zum Absaugen von flüchtigen Stoffen vorhanden.

Als Träger wird eine auf einer Stahlplatte aufgelegte Trennfolie verwendet, die in einem Abstand von 520 mm zur Faserspritzeinheit ausgerichtet ist. Der Spritzwinkel, d.h. der Winkel zwischen der Faserspritzeinheit und dem Träger, wird auf 55° eingestellt. Die Spritzeinheit kann durch die Betätigung eines pneumatischen Fußschalters gestartet werden.

Die kontinuierlichen Endlosfasern (Rovings) werden in dem Faserschneidwerkzeug auf eine Länge von 24 mm gebrochen (geschnitten) und direkt in dem dreidimensional gebildeten Sprühkörper der druckluftbetriebenen Spritzpistole eingeleitet. Durch eine Bewegung bzw. ein Verfahren der Faserspritzeinheit an der Verfahrschiene kann eine flächige, isotrope Faseranordnung (aus Faserbündeln und Suspension) erfolgen, auch über eine Einstellung an der Zerstäubereinheit auf einen Flachstrahl oder einen Rundstrahl mit einer Ausdehnung senkrecht zur Spritzrichtung von ca. 250 mm x 400 mm (Breite x Länge). Durch mehrmaliges Wiederholen des Vorgangs kann die Schichtdicke aus Suspension und Fasern entsprechend den Vorgaben erhöht werden. Nach dem Spritzprozess werden die imprägnierten Kurzfaserbündel mit einem Laminierroller ohne zusätzlich aufgebrachten Druck verdichtet. Dabei wird das Entweichen von entstandenen Luftblasen begünstigt. Im Anschluss verbleibt der Verbund noch 10 min an Luft (unter einer Umgebungstemperatur von 25 °C und einer relativen Luftfeuchtigkeit von 60 %). Danach wird eine zweite Trennfolie aufgelegt und die Faseranordnung wird für 60 min bei 50 °C im Trockenschrank gelagert, um einen Wasserentzug (vorzugsweise bis zu einem Restwassergehalt von ca. 5 wt.% bezogen auf den Gesamtwassergehalt) und eine Verfestigung der gespritzten Faserarchitektur durch den Binder zu gewährleisten und um Faserbündel und Partikel zu fixieren. Danach erfolgt eine hydrothermale Konditionierung bei 25 °C und einer relativen Luftfeuchtigkeit von 60 % für mindestens 5 Stunden, wodurch ein klebriges und verarbeitbares, d.h. verformbares, Prepreg erhalten wird (dieses Verfahren wird nachfolgend als Variante 1 bezeichnet). Ein besonderer Vorteil ist darin zu sehen, dass ein solches Prepreg für 24 Wochen lagerfähig und weiterverarbeitbar ist, wozu eine vollständige Trocknung, d.h. Entfernung des Wassers, vorzunehmen ist.

Das Prepreg kann dann, gegebenenfalls nach einer Zwischenlagerung und Wiederbefeuchtung, anschließend weiterverarbeitet werden, indem es entweder auf Formen drapiert wird oder ein Bauteil durch Fügen von mehreren Prepregs hergestellt wird.

Für das Drapieren auf Formen wird das Prepreg auf einer beliebigen Metallform abgelegt. Nach dem Einschweißen in einen Vakuumsack wird das Prepreg auf der Metallform zunächst für eine Stunde bei Raumtemperatur im Vakuum gepresst, bevor im Anschluss daran eine Vakuumtrocknung (bei 50 mbar (entspricht 5000 Pa) für 2 Stunden bei 70 °C) erfolgt. Gegebenenfalls müssen Trennfolien zwischen der Metallform und dem Vakuumsack eingelegt werden.

Beim Stapeln werden zunächst mehrere Prepregs erzeugt. Diese Prepregs werden manuell aneinander gepresst, so dass eine Haftung der Prepregs aneinander aufgrund deren Klebrigkeit nach der hydrothermalen Konditionierung erreicht wird. Hierbei können beliebig viele Prepregs zusammengefügt werden, bis das Gesamtgebilde der gewünschten Geometrie entspricht. Im Anschluss folgt eine Weiterverarbeitung durch Vakuumpressen und Vakuumtrocknen, wie dies vorstehend beschrieben ist.

Die in den beiden vorstehend beschriebenen Vorgängen erhaltenen Grundkörper werden dann für 2 Stunden bei 1225 °C gesintert.

In einer weiteren Ausführungsform können mehrschichtige Bauteile (Sandwich-Verbunde) hergestellt werden. Eine Variante A beinhaltet die Herstellung eines verarbeitbaren kurzfaserverstärkten Prepregs, wie in Variante 1 beschrieben, und das Ablegen dieses Prepregs zwischen zwei gewebeverstärkten Prepregs. Der Prepreg-Verbund kann als planarer Verbundwerkstoff eingesetzt oder auf Konturen drapiert werden. Der Verbund wird nach der Verarbeitung 120 °C konsolidiert (Entzug des Dispersionsmediums) und für 2 Stunden bei 1225 °C gesintert. Eine Variante B beinhaltet das Faserspritzen direkt auf ein konditioniertes, gewebeverstärktes Prepreg. Anschließend wird eine hydrothermale Konditionierung bei 25 °C Umgebungstemperatur und einer relativen Feuchte von 60 % durchgeführt. Danach wird ein zweites, konditioniertes gewebeverstärktes Prepreg abgelegt. Nach erneuter anschließender hydrothermaler Konditionierung kann die Sandwichstruktur in Form gepresst werden. Anschließend erfolgen die Konsolidierung (Entzug des Dispersionsmediums) bei 120 °C und das Sintern des Bauteils für 2 Stunden bei 1225 °C).

Zusammenfassend werden nach dem erfindungsgemäßen Verfahren Endlosfaserrovings geschnitten und die entstandenen Faserbündel werden vor dem Ablegen über einen Spritzvorgang mit einer niedrigviskosen Suspension imprägniert. Anschließend erfolgt eine Konditionierung oder Gelbildung, wodurch die imprägnierte Faseranordnung zu einem flächigen Prepreg umgesetzt wird.

Es wird ein lagerfähiges Prepreg erhalten, das aus Kurzfaserbündeln mit einer Faserlänge größer 10 mm und einer Suspension aufgebaut ist. Die Faserbündel werden während des Spritzprozesses imprägniert. Eine mechanische Aufbereitung beispielsweise durch Kneten ist nicht notwendig.

Durch die schonende Prozessführung kommt es nicht zu einer Faserdegradation, wie sie durch zu hohe Scherkräfte bei anderen Herstellungsmethoden auftritt. Damit unterscheidet sich das erfindungsgemäße Verfahren von einem keramischen Spritzguss, bei dem vor dem Spritzen ein Feedstock aufbereitet werden muss. Die Faserbündel können isotrop oder vorzugsorientiert abgelegt werden. Nach dem Spritzen erfolgt eine Nachbehandlung der Spritzmasse, die auf dem Träger abgelegt ist, um die Verarbeitungseigenschaften des Prepregs einzustellen. Die Faserbündel des Prepregs sind gegenseitig verschiebbar, was die Verformbarkeit/ Drapierbarkeit signifikant erhöht. Durch die Verformbarkeit können beispielsweise Wölbungen und komplexe dreidimensionale Strukturen durch Fließpressen realisiert werden.

Das Prepreg kann in unterschiedlichen Geometrien abgelegt werden, z.B. flächig, mit veränderlicher Wandstärke, je nach der Bauteilgeometrie bzw. den zu erwartenden Verformungen beim Verdichten oder Drapieren des Prepregs. Alternativ kann die Faseranordnung beim Spritzen direkt auf eine komplexe Form abgelegt werden. Zudem erfolgt die Ablage der Fasern im Prepreg ohne die Ausbildung einer Textur. Es können mehrere Prepregs miteinander gefügt und in Form gebracht werden.

Eine teure und komplizierte textiltechnische Verarbeitung der Faserrovings ist nicht notwendig. Im Vergleich zur Verwendung von Geweben ergibt sich eine Kosteneinsparung von bis zu 30 %. Die Verarbeitung von spröden Faserrovings mit hohen Filamentanzahlen ist möglich.

Die verwendeten Ausgangsstoffe zur Herstellung des Verbundwerkstoffs sind durch den Einsatz von Wasser und alkoholischen Verbindungen unbedenklich. Faserbruchstücke, die beim Schneiden der Fasern im Cutter entstehen können, werden sofort durch den Suspensionsnebel gebunden. Ein Absaugtisch unterbindet die Ausbildung eines Oversprays.

Beim Verdichten des Prepregs kann der Faservolumengehalt eingestellt werden und überschüssige Suspension kann entweichen.

Weitere Einzelheiten und Merkmale der Erfindung ergeben sich aus der nachfolgenden Beschreibung von Ausführungsbeispielen anhand der Zeichnung. In der Zeichnung zeigt
Figur 1 eine schematische Darstellung einer Vorrichtung,
Figuren 2A bis 2C Querschnitte verschiedener nach dem erfindungsgemäßen Verfahren hergestellter Produkte/Gegenstände/Prepregs/Composite,
Figur 2D ein Beispiel eines Trägers und
Figur 3 eine Vorrichtung zur Herstellung eines quasi endlosen, faserverstärkten, flächigen Prepregs.

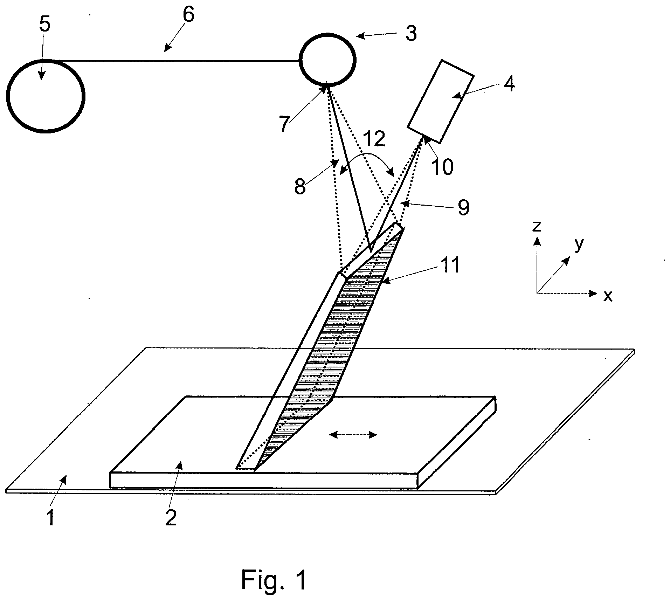

Die Figur 1 zeigt nur einen schematischen Aufbau der Vorrichtung, um auch das erfindungsgemäße Verfahren zur Herstellung eines Zwischenprodukts für die Fertigung eines faserverstärkten Bauteils zu erläutern.

Oberhalb eines Tisches 1, auf dem ein Träger 2 aufgelegt ist, befindet sich, unter einem definierten Abstand zu dem Tisch 1 bzw. dem Träger 2, sowohl eine Auswurfeinrichtung 3 als auch eine Zerstäubungseinrichtung 4.

Der Auswurfeinrichtung 3 werden von einer Vorratsrolle 5 Endlos-Faserbündel 6 zugeführt. Diese Endlos-Faserbündel 6 werden in der Auswurfeinrichtung 3, die ein rotierendes, nicht näher dargestelltes Schneidmesser enthält, in abgelängte Faserbündel unterteilt, d.h. geschnitten oder gebrochen. Die Länge der Faserbündel kann durch die Geschwindigkeit des rotierenden Schneidmessers und/oder durch die Geschwindigkeit, mit der die Endlos-Faserbündel 6 der Schneidvorrichtung zugeführt werden, beeinflusst und eingestellt werden.

Die Auswurfeinrichtung 3 besitzt eine Auswurföffnung 7, die die Richtung festlegt, unter der die geschnittenen Faserbündel 8 unter einem Winkel zu der auf dem Tisch 1 bzw. dem Träger 2 stehenden Flächennormalen ausgeworfen werden.

Die Flächennormale entspricht der z-Achse eines rechtwinkligen Koordinatensystems, das in Figur 1 angedeutet ist, während die x-Achse und die y-Achse die Ebene des Tischs 1 und des Trägers 2 aufspannen.

Die Zerstäubungseinrichtung 4 dient zum Zerstäuben einer Suspension 9 aus keramischen Partikeln, Wasser, Alkohol und einem Dispergator aus deren Düsenöffnung 10. Durch die Art der Düsenöffnung 10 erzeugt die Zerstäubungseinrichtung 4 ein Spritzbild 11 aus dieser Suspension 9. Das Spritzbild 11 ist als ein aus der zerstäubten Suspension 9 aufgespannter, dreidimensionaler Körper definiert. Das Spritzbild 11, d. h. der dreidimensionale Körper, wird, ebenso wie die geschnittenen Faserbündel 8, auf den Träger 2 gerichtet. Die Orientierung der Auswurfrichtung der geschnittenen Faserbündel 8 und des Spritzbilds 11 der Suspension 9 ist so eingestellt, dass sich die Ebenen der aufgefächerten, geschnittenen Faserbündel 8 und das Spritzbild unter einem Winkel 12 von vorzugsweise 30° bis 50° schneiden.

Die geschnittenen Faserbündel 8 werden folglich in das Spritzbild 9 der Zerstäubungseinrichtung 4 eingebracht und homogen benetzt, bevor dann das Spritzbild 11 mit der Suspension 9 und den Faserbündeln 8 auf dem Träger 2 auftrifft. Folglich werden vor dem Ablegen der auf die vorgegebene Länge geschnittenen Faserbündel 8 auf dem Träger 2 die Suspension 9 und die geschnittenen Faserbündel 8 zusammengeführt. Dadurch, dass die geschnittenen Faserbündel 8 unmittelbar nach ihrem Auswurf aus der Auswurfeinrichtung 3 und somit noch während des Flugs in Richtung des Trägers 2 mit der Suspension 9 zusammengeführt werden, kann sichergestellt werden, dass die Bündelstruktur der geschnittenen Faserbündel 8 aufrechterhalten wird und die Bündelstruktur der geschnittenen Faserbündel 8 auch beim Auftreffen des Spritzbilds 11 auf dem Träger 2 gegeben ist.

Obwohl es nicht näher dargestellt ist, können der Tisch 1 und damit der Träger 2, die Auswurfeinrichtung 3 und die Zerstäubungseinrichtung 4 in x-y-Richtung verschoben werden, ebenso wie der Abstand der Auswurfeinrichtung 3 bzw. deren Auswurföffnung 7 und der Abstand der Zerstäubungseinrichtung 4 bzw. deren Düsenöffnung 10 zu dem Träger 2 verändert werden kann, um dadurch verschiedene Parameter einzustellen.

Die Ablage der Suspension 9 mit den geschnittenen Faserbündeln 8 auf dem Träger 2 kann wiederholt erfolgen, indem das Spritzbild 11 mehrfach über die Fläche des Trägers 2 verfahren wird. Dadurch kann die sich in z-Richtung aufbauende Dicke des Zwischenprodukts eingestellt werden.

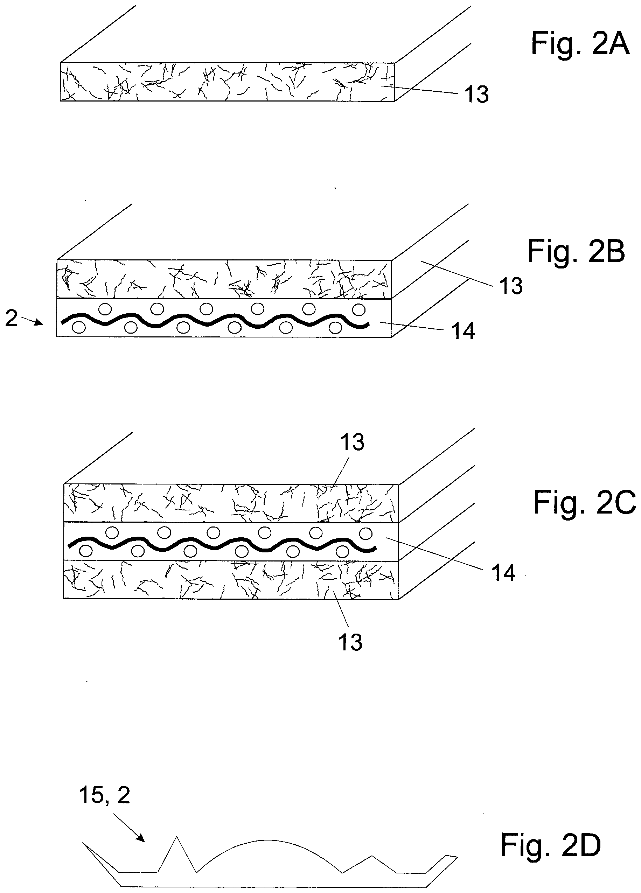

Die Figur 2A zeigt schematisch einen Querschnitt eines einlagigen Zwischenprodukts bestehend aus der Suspension 9 und den geschnittenen Faserbündeln 8, bezeichnet mit dem Bezugszeichen 13.

Die Figur 2B zeigt ein Zwischenprodukt, bei dem als Träger 2 eine aufgewickelte Endlosfaser 14 verwendet wird, auf dem die Schicht aus der Suspension 9 und den geschnittenen Faserbündeln 8 abgelegt wird.

Die Figur 2C zeigt eine weitere Möglichkeit, eine Zwischenschicht beispielsweise in Form einer aufgewickelten Endlosfaser 14 zwischen zwei Schichten 13 aus der Suspension 9 und den geschnittenen Faserbündeln 8 zu integrieren. Für einen solchen Aufbau wird zunächst die Schicht 13 auf dem Träger 2 aufgebaut, wie dies vorstehend anhand der Figur 1 erläutert ist, dann wird auf dieser Schicht die Endlosfaser 14 aufgelegt, um dann erneut eine Schicht 13 auf der aufgewickelten Endlosfaser 14, die dann als Unterlage dient, aufzubauen.

Figur 2D zeigt schematisch eine Form 15, die als Träger 2 dienen kann, die verdeutlichen soll, dass mit dem erfindungsgemäßen Verfahren auch komplizierte und komplexe Formen und Strukturen aufgebaut werden können.

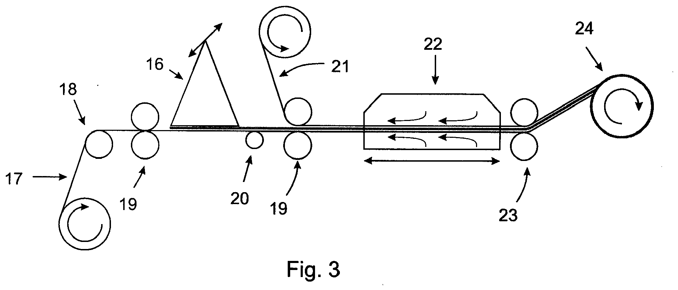

Die Vorrichtung, wie sie in Figur 3 dargestellt ist, dient zur Herstellung eines quasi endlosen, faserverstärkten, flächigen Prepregs, in die die Vorrichtung, wie sie in Figur 1 dargestellt ist, integriert ist und nur schematisch dargestellt allgemein mit dem Bezugszeichen 16 bezeichnet ist. Von einem Vorrat wird eine Trennfolie 17 über eine Umlenkrolle 18 zugeführt, die zwischen zwei Spannvorrichtungen 19, gegebenenfalls durch weitere Unterstützungen 20 gestützt, geführt wird. Zwischen den beiden Spannvorrichtungen 19 wird die Trennfolie 17 in einer Ebene gehalten, die dem Tisch 1 entspricht und die als Träger 2 dient. Die Trennfolie 17 wird über die Vorrichtung 16 mit dem Spritzbild 11, das die Suspension 9 und die geschnittenen Faserbündel 8 enthält, bedeckt. Dieser Vorgang kann kontinuierlich durch einen entsprechenden Transport der Trennfolie 17 oder aber auch getaktet vorgenommen werden.

In der Transportrichtung der Trennfolie 17 gesehen wird hinter der Vorrichtung 16 eine weitere Trennfolie 21 auf das durch die Vorrichtung 16 aufgetragene Material aufgelegt. Das so gebildete Zwischenprodukt wird dann durch eine Trocknungszone 22 geführt und einer Trocknung bei 50 bis 120 °C mit einer Transportgeschwindigkeit von 1 m/min unterworfen, wobei die gesamte Verweildauer in der Trocknungszone 5 Minuten beträgt. Ausgangsseitig der Trocknungszone 22 befindet sich eine Spannvorrichtung 23, der eine Aufrolleinheit 24 für das Compound folgt.

Es ist ersichtlich, dass die in den Figuren 1 und 3 dargestellten Vorrichtungen und die anhand dieser Vorrichtungen beschriebenen Verfahren im Rahmen der vorstehend beschriebenen Maßnahmen angepasst und variiert werden können.

## Patentansprüche

1. Verfahren zur Herstellung eines Zwischenprodukts für die Fertigung eines faserverstärkten Bauteils, bei dem abgelängte Glasfasern, Kohlenstofffasern oder keramische Fasern, keramische Partikel, Wasser, eine alkoholische Verbindung und ein Dispergator eingesetzt werden und aus diesen Bestandteilen das Zwischenprodukt auf einem Träger derart gebildet wird, dass die Fasern durch eine Suspension imprägniert sind, die die keramischen Partikel, das Wasser, die alkoholische Verbindung und den Dispergator enthält, **dadurch gekennzeichnet, dass** als Ausgangsmaterial für das Zwischenprodukt kontinuierliche Faserbündel eingesetzt werden, diese auf eine Länge von 2 mm bis 50 mm geschnitten werden und dass die Suspension, die zerstäubt wird, deren Viskosität auf Werte auf unter 1 Pa s bei einer Scherrate von 1 s⁻¹ eingestellt wird, und die geschnittenen Faserbündel unter Aufrechterhaltung deren Bündelstruktur vor einem Ablegen der auf die vorgegebene Länge geschnittenen Faserbündel auf dem Träger zusammengeführt werden.

2. Verfahren nach Anspruch 1, **dadurch gekennzeichnet, dass** die Bündelstruktur durch Einstellung der Viskosität der zugeführten Suspension und/oder durch Einstellen der Länge der zugeführten Faserbündel aufrechterhalten wird.

3. Verfahren nach Anspruch 1 oder 2, **dadurch gekennzeichnet, dass** mindestens zwei unterschiedliche Längen geschnittener Faserbündel zugeführt werden.

4. Verfahren nach einem der Ansprüche 1 bis 3, **dadurch gekennzeichnet, dass** zwei Fasertypen als Faserbündel eingesetzt werden.

5. Verfahren nach einem der Ansprüche 1 bis 4, **dadurch gekennzeichnet, dass** die kontinuierlichen Faserbündel zu einer definierten Länge von 2 mm bis 15 mm, bevorzugt von 2 mm bis 8 mm, unterteilt werden.

6. Verfahren nach einem der Ansprüche 1 bis 5, **dadurch gekennzeichnet, dass** die Faserbündel jeweils 100 Filamente bis 20.000 Filamente aufweisen, wobei der Durchmesser der einzelnen Filamente 7 µm bis 15 µm beträgt.

7. Verfahren nach einem der Ansprüche 1 bis 6, **dadurch gekennzeichnet, dass** das Verhältnis zwischen Faserbündeln und Suspension im Zwischenprodukt so eingestellt wird, dass ein Faservolumengehalt in dem faserverstärkten Bauteil nach einer Trocknung und Sinterung 15 Vol.% bis 50 Vol.%, bevorzugt 20 Vol.% bis 40 Vol.%, beträgt.

8. Verfahren nach einem der Ansprüche 1 bis 7, **dadurch gekennzeichnet, dass** die keramischen Fasern ausgewählt sind aus Fasern aus Al₂O₃, SiO₂, ZrO₂, Y₂O₃, Y₂O₃-stabilisiertem ZrO₂, Yttrium-Aluminium-Granat, Mullit, Si₃N₄, SiC, SiCN, SiBNC oder Kombinationen von zwei oder mehr dieser Materialien.

9. Verfahren nach einem der Ansprüche 1 bis 8, **dadurch gekennzeichnet, dass** die keramischen Partikel solche sind aus Al₂O₃, SiO₂, ZrO₂, Y₂O₃, Y₂O₃-stabilisiertem ZrO₂, Yttrium-Aluminium-Granat, Mullit, Si₃N₄, SiC, SiCN, SiBNC oder aus Kombinationen von zwei oder mehr solcher Materialien von Partikeln.

10. Verfahren nach Anspruch 1, **dadurch gekennzeichnet, dass** eine flächenisotrope Verteilung der Faserbündel auf dem Träger durch Einstellung eines Winkels, unter dem die geschnittenen Faserbündel und die Suspension zusammengeführt werden, und/oder durch Einstellung der Flugbahn der Faserbündel in Richtung des Trägers und/oder durch Einstellung eines Abstands zwischen einer Zerstäubereinheit, die die Suspension abgibt, und dem Träger erzeugt wird.

## Claims

1. Process for the production of an intermediate product for the manufacture of a fibre-reinforced component, in which cut-to-length glass fibres, carbon fibres or ceramic fibres, ceramic particles, water, an alcoholic compound and a dispersant are used and from these constituents the intermediate product is formed on a support in such a way that the fibres are impregnated by a suspension containing the ceramic particles, the water, the alcoholic compound and the dispersant, **characterised in that** continuous fibre bundles are used as the starting material for the intermediate product, these are cut to a length of 2 mm to 50 mm and **in that** the suspension which is atomised, is adjusted to values below 1 Pa s at a shear rate of 1 s⁻¹, and the cut fibre bundles are brought together while maintaining their bundle structure before the fibre bundles cut to the predetermined length are deposited on the support.

2. Method according to claim 1, **characterized in that** the bundle structure is maintained by adjusting the viscosity of the supplied suspension and/or by adjusting the length of the supplied fiber bundles.

3. Method according to claim 1 or 2, **characterized in that** at least two different lengths of cut fiber bundles are fed.

4. Process according to one of claims 1 to 3, **characterized in that** two types of fibres are used as fibre bundles.

5. Method according to one of claims 1 to 4, **characterized in that** the continuous fiber bundles are divided into a defined length of 2 mm to 15 mm, preferably 2 mm to 8 mm.

6. Process according to one of claims 1 to 5, **characterized in that** the fiber bundles each comprise 100 filaments to 20,000 filaments, the diameter of the individual filaments being 7 µm to 15 µm.

7. Process according to any one of Claims 1 to 6, **characterized in that** the ratio between fiber bundles and suspension in the intermediate product is adjusted in such a way that a fiber volume content in the fiber-reinforced component after drying and sintering is 15 % to 50 % by volume, preferably 20 % to 40 % by volume.

8. Process according to any one of claims 1 to 7, **characterized in that** the ceramic fibers are selected from fibers of Al₂O₃, SiO₂, ZrO₂, Y₂O₃, Y₂O₃-stabilized ZrO₂, yttrium-aluminum-garnet, mullite, Si₃N₄, SiC, SiCN, SiBNC or combinations of two or more of these materials.

9. Process according to any of claims 1 to 8, **characterized in that** the ceramic particles are those of Al₂O₃, SiO₂, ZrO₂, Y₂O₃, Y₂O₃-stabilized ZrO₂, yttrium-aluminum-garnet, mullite, Si₃N₄, SiC, SiCN, SiBNC or combinations of two or more of such materials of particles.

10. Method according to claim 1, **characterized in that** an area isotropic distribution of the fiber bundles on the support is produced by adjusting an angle at which the cut fiber bundles and the suspension are brought together and/or by adjusting the trajectory of the fiber bundles in the direction of the support and/or by adjusting a distance between an atomizer unit discharging the suspension and the support.

## Revendications

1. Procédé de production d'un produit intermédiaire pour la fabrication d'une pièce renforcée par des fibres, dans lequel des fibres de verre, des fibres de carbone ou des fibres céramiques coupées à longueur, des particules céramiques, de l'eau, un composé alcoolique et un dispersant sont utilisés et le produit intermédiaire est formé à partir de ces composants sur un support de telle manière que les fibres sont imprégnées par une suspension qui contient les particules céramiques, l'eau, le composé alcoolique et le dispersant, **caractérisé en ce que** des faisceaux de fibres continus sont utilisés comme matériau de départ pour le produit intermédiaire, ceux-ci sont coupés à une longueur de 2 mm à 50 mm et **en ce que** la suspension, qui est pulvérisée, dont la viscosité est ajustée à des valeurs inférieures à 1 Pa s à un taux de cisaillement de 1 s⁻¹, et les faisceaux de fibres coupés avec maintien de leur structure de faisceau sont réunis avant un dépôt des faisceaux de fibres coupés à la longueur spécifiée sur le support.

2. Procédé selon la revendication 1, **caractérisé en ce que** la structure de faisceau est maintenue par ajustement de la viscosité de la suspension amenée et/ou par ajustement de la longueur des faisceaux de fibres amenés.

3. Procédé selon la revendication 1 ou 2, **caractérisé en ce qu'**au moins deux longueurs différentes de faisceaux de fibres coupés sont amenées.

4. Procédé selon l'une des revendications 1 à 3, **caractérisé en ce que** deux types de fibres sont utilisés comme faisceaux de fibres.

5. Procédé selon l'une des revendications 1 à 4, **caractérisé en ce que** les faisceaux de fibres continus sont divisés à une longueur définie de 2 mm à 15 mm, de préférence de 2 mm à 8 mm.

6. Procédé selon l'une des revendications 1 à 5, **caractérisé en ce que** les faisceaux de fibres comportent chacun 100 filaments à 20 000 filaments, le diamètre des filaments individuels étant de 7 µm à 15 µm.

7. Procédé selon l'une des revendications 1 à 6, **caractérisé en ce que** le rapport entre faisceaux de fibres et suspension dans le produit intermédiaire est ajusté de telle sorte qu'une teneur volumique de fibres dans la pièce renforcée par des fibres après un séchage et un frittage est de 15 % en volume à 50 % en volume, de préférence de 20 % en volume à 40 % en volume.

8. Procédé selon l'une des revendications 1 à 7, **caractérisé en ce que** les fibres céramiques sont choisies parmi les fibres en Al₂O₃, SiO₂, ZrO₂, Y₂O₃, ZrO₂ stabilisé avec Y₂O₃, grenat yttrium-aluminium, mullite, Si₃N₄, SiC, SiCN, SiBNC ou des combinaisons de deux ou plusieurs de ces matériaux.

9. Procédé selon l'une des revendications 1 à 8, **caractérisé en ce que** les particules céramiques sont en Al₂O₃, SiO₂, ZrO₂, Y₂O₃, ZrO₂ stabilisé avec Y₂O₃, grenat yttrium-aluminium, mullite, Si₃N₄, SiC, SiCN, SiBNC ou des combinaisons de deux ou plusieurs de ces matériaux de particules.

10. Procédé selon la revendication 1, **caractérisé en ce qu'**une répartition isotrope en surface des faisceaux de fibres sur le support est produite par ajustement d'un angle sous lequel les faisceaux de fibres coupés et la suspension sont amenés, et/ou par ajustement de la trajectoire des faisceaux de fibres en direction du support et/ou par ajustement d'une distance entre une unité de pulvérisation qui délivre la suspension et le support.
